# EUROPEAN PATENT APPLICATION

(11) **EP 2 878 200 A1**
(43) Date of publication of application: **03.06.2015**
(21) Application number: 13195059.4
(22) Date of filing: 29.11.2013
(51) Int. Cl.: A21B 3/04, F24C 14/00

(54) **Cooking oven comprising a descaling apparatus**

(71) Applicant: ELECTROLUX PROFESSIONAL S.p.A., 33170 Pordenone (IT)
(72) Inventor: Simonato, Michele, I-33170 Pordenone (IT); Marchesin, Claudio, I-33170 Pordenone (IT); Cescot, Paolo, I-33170 Pordenone (IT); Foda, Alberto, I-33170 Pordenone (IT)
(74) Representative: Maccalli, Marco

(57) **Abstract**

A cooking oven **(100)** is proposed. The cooking oven **(100)** comprises a cooking portion **(100_{COOK})** adapted to cook food stored therein, a components portion **(100_{COMP})** for housing components that allow and control an operation of the cooking oven **(100),** a steam generation system for generating steam and for supplying the generated steam to the cooking portion, the steam generation system comprising a boiler **(110; 110')** with a vessel **(115; 115')** adapted to contain water to be converted into steam, and a descaling apparatus **(200; 300; 400)** adapted to remove scales/limestone from the steam generation system. In the solution according to an embodiment of the invention, the descaling apparatus **(200; 300; 400)** comprises a support body **(240; 410)** in fluid communication with the vessel **(115; 115').** The support body **(240; 410)** is adapted to be provided with a descaling agent container **(205).** The descaling agent container **(205)** is adapted to store a descaling agent **(210)** and has an opening sealed by a sealing element **(235).** The support body **(240; 410)** is shaped so that once the descaling agent container **(205)** is coupled with the support body **(240; 410),** the sealing element **(235)** sealing the opening of the descaling agent container results exposed to the steam generated in the vessel **(115; 115').**

## Description

### Field of the invention

The solution according to embodiments of the invention generally relates to household or professional electric appliances. More particularly, the solution relates to household or professional cooking ovens provided with steam generation systems for allowing food cooking by, or with the additional provision of, steaming. Even more particularly, the solution relates to a descaling apparatus to combat limestone deposition in such steam generator systems.

### Background of the invention

A widely used class of household or professional cooking ovens are adapted to offer functionalities of food cooking by steam (typically, in addition to other traditional cooking techniques).

In order to achieve that, such cooking ovens typically comprise steam generation systems comprising boilers for generating steam from water.

A typical boiler comprises a (generally, metal) vessel adapted to be selectively supplied with water (e.g., automatically through an inlet piping connected to a water mains, as usual in professional cooking ovens, or manually by a user, as usual in household cooking ovens) and, within said vessel, one or more heating elements (e.g., one or more immersion resistor heaters), adapted to be submerged (i. e., totally immersed) by water and to generate steam by water heating. In addition, the steam generation system comprises a steam feeding piping (e.g., comprising one or more pipes), coupled with the boiler, adapted to allow the steam generated in the boiler into a cooking chamber of the cooking oven in order to steam *(i.e.,* cook by means of steam) food stored therein.

Unfortunately, during the operation of the boiler, insoluble solid limestone *(i.e.,* calcium carbonate CaCO₃) may form *(i.e.,* deposit) within thereof, and in other parts of the steam generation system exposed to water or steam generated by the boiler *(e.g.,* outlet piping connected to the vessel of the boiler for discharging water stored therein).

The limestone deposition on the heating elements of the boiler has serious detrimental effects on the lifetime thereof and on their efficiency in terms of absorbed power. For example, limestone deposition on immersion heating resistors reduces the steaming performances of the cooking. Indeed, the limestone deposition on the heating elements reduces a thermal exchange capability thereof. Such reduction in the thermal exchange capability causes an increase in the electric power consumption and in the time needed for heating the water up to convert it into steam and causes an acceleration of wearing out of the heating elements due to an increase of the surface temperature thereof during operation.

Moreover, due to the steep temperature changes (also referred to as thermal shocks), caused by the use of fresh water, for example supplied from water mains at the start of a steaming cycle, the limestone tends to detach from its deposition site *(e.g.,* from a surface of the heating resistors) as scales.

Such limestone scales, or simply scales, beyond amassing inside the boiler, may also enter into the outlet (and/or possibly also into the inlet piping) and obstruct thereof. Indeed, the limestone deposition and/or scales accumulation may reduce the cross sections of the pipes, causing a lower flow rate of the water drained by the outlet piping from the boiler (and/or introduced by the inlet piping into the boiler) with respect to an expected flow rate required a proper operation. Finally, solenoid valves provided along the outlet (and/or inlet) piping also experience limestone deposition and/or scales accumulation on components thereof (particularly on moving components) with a subsequent increase in friction effects that may lead to a clogging of the solenoid valves, thus sensibly reducing their expected lifetime.

In the art, several systems and procedures have been developed for reducing the limestone deposition and scales accumulation, which are referred to either as descaler or delime systems and as descaling or delime procedures, respectively, in the following.

A number of descaler systems and/or descaling procedures have been provided for preliminary treating water in order to lower its hardness *(i.e.,* a water parameter proportional to concentration of calcium ions diluted in water). For example, cooking ovens comprising water-softener systems have been provided. However, the Applicant has perceived that such systems are highly expensive to be implemented and require a regular maintenance in order to operate properly.

Alternatively, in order to reduce and/or remove limestone deposits and scales accumulation it is possible to periodically execute a general maintenance of the machine by manually cleaning the individual portions of the boiler with chemical treating agents, typically acid solutions. However, such maintenance requires a qualified technician to be carried out and requires an at least partial disassembly of the cooking oven *(e.g.,* for treating the boiler and the immersion heating resistor).

In a certain number of cooking ovens, the descaling procedure comprises the use of chemical treating agents that are usually stored in encumbering tanks with a large capacity *(e.g.,* 5L or even more), which are (externally) connected (by a qualified technician) to a dedicated portion of the boiler for performing a descaling procedure.

In the art, descaler systems and/or descaling procedures have been provided which used a cartridge containing a descaling chemical agent. An example of such cartridge is described in DE202010012989.

DE102004004393 describes a cooking device comprising a closable inner cooking chamber, a heating device, an element for circulating fluid at least in the inner cooking chamber, and an air-guiding element with a front surface facing the inner cooking chamber, a rear surface facing away from the inner cooking chamber and facing the fluid-circulating element, and a first opening in the air-guiding element at least partly in the region of the fluid-circulating element. A device for receiving and dispensing a cleaning, clear rinsing and/or antiliming agent is attached or provided in, in front of and/or behind the first opening in the air-guiding element.

### Summary of invention

The Applicant has realized that the known techniques do not provide a satisfactory solution for descaling steam generator systems in cooking ovens.

In particular, the Applicant has verified that known techniques based on dedicated descaling systems to be provided in addition to the other functional parts of the cooking ovens and based on a descaling procedure performed by a qualified technician, result impractical and requires high maintenance costs with a subsequent risk that a user neglects scheduling and implementing a proper maintenance of the cooking oven.

The known solution based on the use of cartridges of chemical treating agents achieve a limited efficiency, since such cartridges are inserted in operation inside the cooking chamber, only partially reaching the boiler, thereby having a reduced effect with respect to limestone deposited therein.

The Applicant has tackled the problem of devising an improved solution able to overcome the above-discussed, as well as other, drawbacks.

One or more aspects of the solution according to embodiments of the invention are set out in the independent claims, with advantageous features of the same solution that are indicated in the dependent claims.

An aspect of the solution according to one or more embodiments of the present invention relates to a cooking oven. The cooking oven comprising a cooking portion adapted to cook food stored therein, a components portion for housing components that allow and control an operation of the cooking oven, a steam generation system for generating steam and for supplying the generated steam to the cooking portion, the steam generation system comprising a boiler with a vessel adapted to contain water to be converted into steam, and a descaling apparatus adapted to remove scales/limestone from the steam generation system. In the solution according to an embodiment of the present invention, the descaling apparatus comprises a support body in fluid communication with the vessel. The support body is adapted to be provided with a descaling agent container. The descaling agent container is adapted to store a descaling agent and has an opening sealed by a sealing element. The support body is shaped so that once the descaling agent container is coupled with the support body, the sealing element sealing the opening of the descaling agent container results exposed to the steam generated in the vessel.

In an embodiment of the invention, the support body comprises a housing portion having a top aperture and a housing cavity adapted to at least partly house the descaling agent container, the top aperture being adapted to be fitted by descaling agent container.

In an embodiment of the invention, the housing portion comprises a groove within the housing cavity. The groove is adapted to house at least partly a holding element; in its turn the holding element is adapted to hold the descaling agent container in its working position once inserted.

In an embodiment of the invention, the support body comprises a funnel portion having a funnel cavity in fluid communication with the housing cavity. The funnel cavity has a cross-section with a size decreasing from a funnel top aperture at the housing cavity to a funnel neck.

In an embodiment of the invention, the boiler comprises a descaler pipe projecting transversal to the vessel, and the support body comprises a receptacle portion having a receptacle cavity in fluid communication with the funnel cavity of the funnel portion through the funnel neck. The receptacle cavity has a size adapted to be fitted by a free end portion of the descaler pipe.

In an embodiment of the invention, the receptacle portion comprises a groove within the receptacle cavity. The groove is adapted to house at least partly a further holding element; in its turn the holding element is adapted to hold the descaler pipe and the body in their working position.

In an embodiment of the invention, the funnel neck has a size corresponding to, or smaller than, an inner size of the descaler pipe.

In an embodiment of the invention, the support body comprises an expansion portion provided between the housing portion and the funnel portion. The expansion portion has an expansion cavity in fluid communication with both the housing cavity and the funnel cavity, and an expansion aperture having a size larger than a size of a container aperture of the descaling agent container but smaller than the size of the housing cavity.

In an embodiment of the invention, the cooking oven further comprises a support element adapted to support the sealing element of the descaler container. The support element comprises a base adapted to couple with the housing portion at a bottom of the housing cavity, a hole for allowing steam reaching the housing cavity and the descaling agent leaving the housing cavity and a plurality of support flanges protruding from the base towards the top aperture of the housing portion adapted to contact and support the sealing element.

In an embodiment of the invention, the support body comprises a neck portion having a neck cavity in fluid communication with the housing cavity of the housing portion through the neck aperture. The neck aperture has a size larger than a size of a container aperture of the descaling agent container but smaller than the size of the housing cavity. The neck cavity faces the interior of the vessel.

In an embodiment of the invention, the vessel comprises a body aperture adapted to be coupled with the support body.

In an embodiment of the invention, the support body is coupled with the boiler in a removable manner.

In an embodiment of the invention, the support body is coupled with the boiler in a non-removable manner.

In an embodiment of the invention, the descaling apparatus further comprises a cap adapted to seal the top aperture.

In an embodiment of the invention, the holding element and/or the further holding element comprise at least one O-ring gasket element.

The proposed solution allows implementing a descaling procedure acting directly on the boiler of the steam generator system, such descaling procedure may be easily performed by a user of the cooking oven without any particular training or capability.

### Brief description of the annexed drawings

These and other features and advantages of the present invention will be made apparent by the following description of some exemplary and non limitative embodiments thereof. For its better intelligibility, the following description should be read making reference to the attached drawings, wherein:
**Figure 1** schematically shows a perspective side view with removed parts of a cooking oven according to an embodiment of the invention;
**Figure 2A** is a cross-sectional side view of a boiler comprising a descaling apparatus according to an embodiment of the invention;
**Figure 2B** is a cross-sectional and enlarged view of the descaling apparatus of **Figure 2A****;**
**Figure 3A** is a side views a cross-sectional side view of a boiler comprising a descaling apparatus according to another embodiment of the invention;
**Figure 3B** is a cross-sectional and enlarged view of the descaling apparatus of **Figure 3A****;**
**Figure 4A** is a cross-sectional side view of a boiler comprising a descaling apparatus according to a different embodiment of the invention, and
**Figure 4B** is a cross-sectional and enlarged view of the descaling apparatus of **Figure 4A****.**

### Detailed description of preferred embodiments of the invention

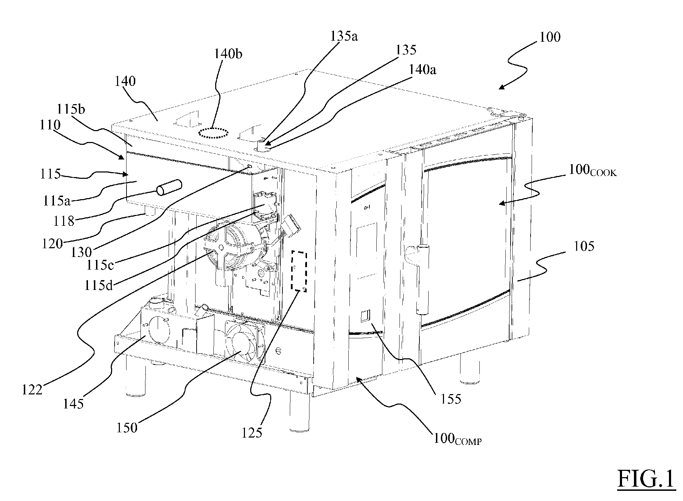

Referring now to the drawings, **Figure 1** schematically shows a perspective side view, with removed parts, of a cooking oven **100** according to an embodiment of the invention. In the exemplary embodiment here considered, a freestanding professional cooking oven **100** is disclosed, but the principles of the invention may also be applied to built-in (household or professional) cooking ovens and to freestanding household cooking ovens. The cooking oven **100** may be a steam oven allowing food cooking by steam, or, as herein assumed by way of example only, a combined cooking oven selectively allowing conventional food cooking (*e.g*., food cooking by heat convection), food cooking by steam, or combinations thereof.

In order to achieve that, the cooking oven **100** comprises a number of well-known electronic, mechanical and/or electro-mechanical components - however, for the sake of description ease and conciseness, only those being relevant for understanding the invention will be introduced and discussed in the following.

The cooking oven **100** comprises a cooking section **100_{COOK}** for food cooking, and, alongside the cooking section **100_{COOK},** a components section **100_{COMP}** for housing some of the components that allow operation of the cooking oven **100** and control of food cooking.

The cooking section **100_{COOK}** comprises a cooking chamber (not visible) for housing the food to be cooked, and, at a cooking oven front, a door **105** (shown in a closed configuration) for selectively allowing/preventing access to the cooking chamber.

The components section **100_{COMP}** houses, among the other components, a steam generation system, comprising a boiler **110,** for generating cooking steam and supplying it to the cooking chamber (as better discussed herebelow).

The boiler **110** comprises a vessel **115** (preferably made of metal, such as steel) adapted to be fed with water. For example, the vessel **115** is substantially a parallepiped-shaped element comprising a main portion **115a** and a cover portion **115b,** which are coupled and sealed together. An opening **115c** may be provided on a sidewall of the main portion **115a** vessel **115.** Such an opening **115c** allows for the insertion, within the vessel **115,** of a heating element (*e.g*., an immersion resistor heater), not shown, adapted to be submerged (*i.e.*, totally immersed) by water and to generate steam by heating surrounding water (*e.g*., heating water at least up to the boiling point thereof). Preferably, a plurality of coupling elements, such as pegs **115d,** are provided on a periphery of the opening **115c** allowing a firm coupling between the heating element and the vessel **115.**

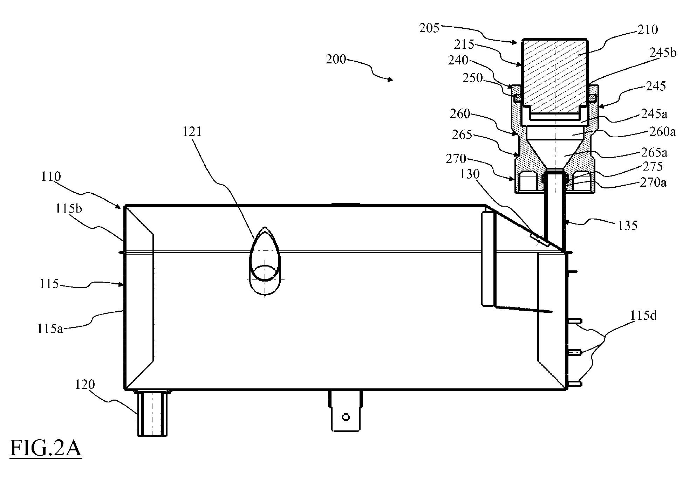

The boiler **110** further comprises a water input **118** for receiving water from a water supply (*e.g*., the water mains, not shown) and a water output **120** for discharging water outside the cooking oven **100** (*e.g.*, into a sewer system, not shown). A steam outlet **121** (visible in **Figure 2A****)** is coupled with the cooking chamber by means of a steam-feeding piping (not visible in the figures).

The cooking oven **100** also comprises a venting system - of which only a fan **122** is visible in the drawing - in fluid communication with the cooking chamber for recirculating air within the cooking chamber.

A control arrangement **125,** preferably housed in the components section **100_{COMP},** is provided for controlling boiler **110** operation (*e.g*., on the basis of instructions stored in a memory comprised in the control arrangement **125).** The control arrangement **125,** illustrated in **Figure 1** as a generic dashed block, may comprise any suitable electronic or electromechanical device.

In response to a cooking program cycle, or to a moisture level within the cooking chamber, the control arrangement **125** is configured for activating the boiler **110,** thereby causing it to generate and feed steam into the cooking chamber.

Moreover, upon detection of an insufficient water level within the vessel **115** (*e.g*., due to steam generation), the control arrangement **125** is configured for preventing boiler **110** activation (or, if already activated, de-activating the boiler **110),** and for allowing entrance of water into the vessel **115** to restore a sufficient water level.

Entrance of water into the vessel **115** is allowed, at manufacturer discretion, until detection of water level restoration or for a predefined time required to water level restoration. Preferably, valves or other electro-hydraulic devices (not shown), *e.g.* controlled by the control arrangement **125,** are interposed between the water input **118** and the water mains for controlling *(i.e.,* enabling or disenabling) the entrance of water. Similarly, valves or other electro-hydraulic devices (not shown), *e.g.* controlled by the control arrangement **125,** are preferably interposed between the water output **120** and the sewer system for controlling *(i.e.,* enabling or disenabling) the discharge of water.

A vessel opening **130** in the vessel **115** is adapted to receive a probe assembly (not shown) that, by cooperation with the control arrangement **125,** allows detection of the water level within the vessel **115.** The vessel opening **130** is preferably provided at a top part of the vessel **115,** so as to receive the probe assembly along a vertical (or substantially vertical, i.e. approximately vertical) direction. Moreover, in the example at issue, the vessel opening **130** is circular, although this should not be construed limitatively.

In the illustrated embodiment, the boiler **110** comprises a descaler pipe **135** projecting transversal to the vessel **115,** preferably from the cover portion **115b** of the vessel **115.** The descaler pipe **135** may be formed integral with the vessel **115** or may be coupled with the latter in any suitable way *(e.g.,* by welding). It should be noted that embodiments of the invention might be applied to cooking oven lacking a descaler pipe **135** as well (as will be described in the following).

Preferably, the descaler pipe **135** passes through an opening **140a** in a top cover **140** of the cooking oven **100.** In this way, an opening **135a** of the descaler pipe **135** is directly accessible *(i.e.,* without the need of disassembling the cooking oven **100).** Even more preferably, a gasket element (not shown in the drawing) may be provided between the opening **140a** and the descaler pipe **135** in order to seal the internal parts of the component section **100_{COMP}** from the external environment.

The descaler pipe **135** is in fluid communication with the inside of the vessel **115** *(i.e.,* where the water is heated and converted into steam) and is typically used, by a qualified technician, for introducing a treating chemical *(e.g.,* a descaling product, such as phosphoric acid or other strong inorganic acids) inside the vessel **115.**

A cap (not shown in the drawing) is provided in order to seal the opening **135a** of the descaler pipe **135** during cooking operation of the cooking oven **100** (avoiding steam and pressure leakage through the opening **135a).**

For the sake of description completeness, the components section **110_{COMP}** also houses a cooking fumes exhaust system **145** for exhausting the cooking fumes from the cooking chamber outside the cooking oven **100** and a cooling fan **150** for cooling down the components housed within the components section **110_{COMP},** and comprises, *e.g.* at the cooking oven front alongside the door **105,** a control panel **155** for allowing the user to set desired cooking parameters *(e.g.,* cooking temperature, cooking time, and/or cooking programs) and displaying cooking information.

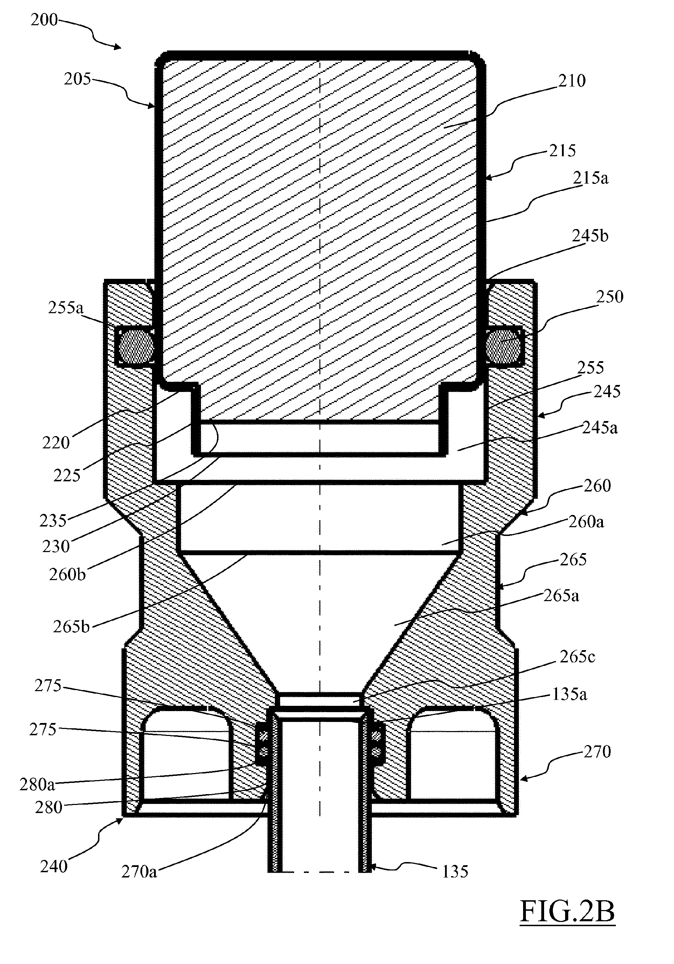

The cooking oven **100** further comprises a descaling apparatus **200** as shown in **Figures 2A** and **2B****.**

The descaling apparatus **200** according to an embodiment of the present invention is suitable for the use of a descaling product unit or cartridge, such as for example a descaler product container, or simply descaler container **205** (as described in detail in the following). The descaling apparatus **200** is designed to allow an effective pouring of the descaler product into the vessel **115** of the boiler **110** of the cooking oven **100** in order to combat limestone deposition and scales. The descaling apparatus **200** of the present embodiment is particularly designed to be used in cooking ovens **100** having the descaler pipe **135** as previously described.

Preferably, the descaler container **205** is a vessel-like element adapted to contain a predetermined amount of descaling agent **210.** Advantageously, the descaler container **205** may be sized for containing an amount of the descaling agent **210** needed to perform a single descaling treatment for removing limestone deposit and scales from the boiler **110.** The descaling agent **210** may be in any form adapted to the use in the boiler **110.** For example, the descaling agent **210** may be provided in powder form, beads form, liquid form and/or gel form.

The descaler container **205** comprises a container body **215,** for example substantially shaped as a hollow cylinder (even though other shapes may be used as well). At one of its ends, the container body **215** has a shoulder portion **220,** substantially transversal to (main) sidewalls **215a** of the container body. A container neck **225** delimits a container aperture **230** and protrudes substantially transversally from the shoulder portion **220** (preferably, parallel to the sidewalls **215a).** Preferably, the shoulder portion **220** of the descaler container **205** may be formed inclined or curved in such a way to ensure a complete outflow of the descaling agent **210** from the descaler container **205** when the latter is inserted into the descaling apparatus **200.** The container neck **225** and the container aperture **230** preferably have a diameter smaller than a diameter of the container body **215.**

Preferably, although not limitatively, the container body **215** is a one-piece element. The container body **215** is made of a material adapted to store the descaling agent **210** without experiencing leakages, such as a plastic polymer *(e.g.,* polyethylene or polystyrene). In an embodiment of the invention, the descaler container **205** is adapted to be re-used.

A sealing element **235** closes the container aperture **230** preventing the descaling agent from leaking out of the descaler container **205** (thus preventing any possibility of a direct contact between the descaling agent **210** inside the container body **215** and the user handling the descaler container **205).** The sealing element **235** may be provided in the form of a film of a suitable material adapted to be opened (e.g., dissolved) by steam or simply by a combination of hot temperature and water molecules suspended in the vapor generated by the boiler **110** (as described in the following). For example, the sealing element **235** may be formed of a water-soluble material (e.g., comprising wax).

The descaling apparatus **200** comprises a support body **240** fluidly connected or connectable to, and preferably removable from, the descaler pipe **135.** Thus, the descaling apparatus **200** is fluidly connected to the vessel **115** of the boiler **110** through the descaler pipe **135.** The body **240** may be made of any material adapted to operate properly with the descaling agent **210** and the steam generated by the boiler **110** *(e.g.,* without suffering damages or deformations due to operating temperatures, pressure and/or due to chemical reactions with the descaling agent **210).** For example, the material of the body **240** may be selected among polymeric, metallic or ceramic materials, such as a glass-filled aliphatic polyamide *(e.g.,* glass-filled Nylon) or a graphite-filled polytetrafluoroethylene *(e.g.,* graphite-filled Teflon).

The body **240** of the descaling apparatus **200 -** as can be best seen in **Figure 2B** **-** preferably comprises a (top) housing portion **245** adapted to, at least partly, house the descaler container **205.** For example, the housing portion **245** has substantially a housing cavity **245a** adapted to house the descaler container **205** *(e.g.,* cylindrical even though prism-shaped alternative housing portions are not excluded, for housing correspondingly prism-shaped containers).

Preferably, the housing portion **245** comprises a top aperture **245b** that, in the example at issue, opens at the top of the descaling apparatus **200** *(i.e.,* in the environment outside the cooking oven **100).** The top aperture **245b** is adapted to be fitted by the container body **215,** allowing the, at least partial, insertion of the descaler container **205** in the housing cavity **245a.** Preferably, the container body **215** fits the top aperture **245b** with its sidewalls **215a.**

Within the housing cavity **245a** of the housing portion **245** a (container) holding element **250** is provided, in order to hold the descaler container **205** in its working position once inserted. For example, the holding element **250** may be implemented by an O-ring (for a cylindrical housing portion **245** and a cylindrical descaler container **205),** by any other suitable mechanical gasket, or by any equivalent thereof.

The holding element **250** is, at least partly, arranged in a groove, or niche, **255a** provided in an inner wall **255** (which delimits the housing cavity **245a)** of the housing portion **245.** Preferably, the groove **255a** is provided in the inner wall **255** in a position close to the top aperture **245a.**

The holding element **250** is adapted to block the descaler container **205** in its working position, once the latter is inserted in the housing portion **245** of the body **240.** Particularly, the holding element **250** is designed to hold the descaler container **205** (by interference fit) in its working position against a kinetic force generated by the pressure within the boiler **110** during the generation of steam. In other words, the holding element **250** prevents the descaler container **205** form popping out of the housing portion **245** of the body **240** due to steam pressure. Preferably, the holding element **250** is made of any suitable material ensuring a high static friction coefficient, such as for example a silicone foam or a polymeric elastomer.

It should be noted that alternative holding elements (not shown) might be devised in order to hold the descaler container **205.** For example, snap-fitting, threaded or bayonet-type holding elements may be provided as an alternative in the housing portion **245.** Such snap-fitting, threaded or bayonet-type holding elements being adapted to couple with corresponding additional matching portions (not shown) provided on the descaler container **205.**

Preferably, although not limitatively, at a lower end of the housing portion **245** *(i.e.,* opposite to the top aperture **245b)** an expansion portion **260** is provided. The expansion portion **260** has an expansion cavity **260a** that is in fluid communication with the housing cavity **245a** of the housing portion **245.** For example, at the bottom of the housing portion **245** an expansion aperture **260b** seamlessly connects the housing cavity **245a** to the expansion cavity **260a.** Even more preferably, the expansion aperture **260b** has a size *(e.g.,* a diameter in case of a cylindrical descaler container **205)** larger than a size of the container aperture **230** in such a way to facilitate a pouring of the descaling agent **210** (as described in the following). In the embodiment shown in the drawings, the size *(e.g.,* the diameter) of the expansion cavity **260a** is smaller than the size of the housing cavity **245a** (even though expansion cavity **260a** equal to, or larger than, the housing cavity **245a** may be alternatively provided as well).

Beneath the housing portion **245** and the expansion portion **260** (if provided), a funnel portion **265** is provided. The funnel portion **265** comprises a funnel cavity **265a** in fluid communication with the housing cavity **245a** and the expansion cavity **260a.** For example, at the bottom of the expansion portion **260** a funnel top aperture **265b** seamlessly connects the funnel cavity **260a** with the expansion portion **260.** Preferably, the funnel top aperture **265a** has a size substantially equal to the size of the expansion cavity **260a** above.

The funnel cavity **265a** has a cross-section with a size decreasing from the funnel top aperture **265b** towards the bottom of the funnel portion **260.** At the bottom of the funnel portion **260** *(i.e.,* opposite to the funnel top aperture **265b)** a funnel neck **265c** is provided. The funnel neck **265c** has a size substantially smaller than the funnel top aperture **265b.** Preferably, the funnel neck **265c** has a size (e.g., a diameter) substantially corresponding to, or smaller than, an inner size (e.g., diameter) of the descaler pipe **135.**

Beneath the funnel neck **265c,** a receptacle portion **270** is provided. The receptacle portion **270** comprises a receptacle cavity **270a** in fluid communication with the funnel cavity **265a** through the funnel neck **265c.**

The receptacle cavity **270a** has a size *(e.g.,* a diameter) adapted to be fitted by a free end portion the descaler pipe **135.** For example, the receptacle cavity **270a** has a size substantially equal to an external diameter of the descaler pipe **135.**

Within the receptacle portion **270** a (pipe) holding element **275** is provided, in order to hold the descaler pipe **135** by interference fit in its working position once inserted. For example, the holding element **275** may be implemented by a couple of O-rings (for a cylindrical receptacle cavity **270a** and a cylindrical descaler pipe **135),** by any other suitable mechanical gasket, or any equivalent thereof.

The holding element **275** is, at least partly, arranged in a groove, or niche, **280a** provided in an inner wall **280** of the pipe receptacle **270.** For example, the couple of O-rings may be arranged stacked one over the other in the groove **280a.** Preferably, the groove **280a** is provided in the inner wall **280** in an upper position of the receptacle cavity **270a,** *e.g.* close to the funnel neck **265b.**

The holding element **275** is adapted to block the descaler pipe in its working position, once the latter is inserted in the receptacle cavity **270a** of the body **240.** Particularly, the holding element **275** is designed to hold descaler pipe **135** and the body **240** in their working positions against a kinetic force generated by the pressure within the boiler **110** during the generation of steam. In other words, the holding element **275** prevents the body **240** (together with the descaler container **205)** from being projected away from the descaler pipe **135** by steam pressure. Preferably, the holding element **275** may be made of any suitable material ensuring a high static friction coefficient, such as for example a silicone foam or a polymeric elastomer as above.

Preferably the housing portion **245,** the expansion portion **260,** the funnel portion **265** and the pipe receptacle **270,** all share a common (longitudinal) symmetry axis. In this way, also the descaler container **205** and the descaler pipe **135 -** once inserted in the housing portion **245** and in the pipe receptacle **270,** respectively - result to be coaxial with each other and with the (hollow) portions **245, 260, 265** and **270** of the body **240** therebetween.

In summary, when the body **240** is coupled with the descaler pipe **135** (by means of the receptacle portion **270)** and with the descaler container **205,** the resulting descaling apparatus **200** results to be substantially hermetically sealed from the external environment. In addition, the sealing element **235** of the descaler container **205** faces (downwards) towards the pipe opening **135a** of the descaler pipe **135.**

Preferably, the body **240** is a single piece element, i.e. with the (hollow) portions **245, 260, 265** and **270** integral with each other (even though embodiment with stand-alone portions **245, 260, 265** and **270** that are coupled together for forming the body **240** are not excluded).

It should be noted that the descaler apparatus **200** may be implemented in cooking ovens **100** already marketed, provided that such cooking ovens **100** features the descaler pipe **135.**

In an alternative embodiment of the invention (not shown), the body **240** and the descaler pipe **135** may be coupled in a non-removable manner. In such an embodiment, the pipe holding element **275** is not provided and the body **240** may be glued, overmolded or formed integral with the descaler pipe **135.** A cap (not shown) is provided to seal the top aperture **245b** when the descaling procedure is not performed *(i.e.,* when the descaler container **205** is not inserted in the housing portion **245).**

Having described the structure of the descaling apparatus **200** according to an embodiment of the invention, an assembly procedure and a descaling procedure for the descaling apparatus **200** are described.

Initially, in order to assembly the descaling apparatus **200** for implementing a descaling procedure in the cooking oven **100,** the cap of the pipe opening **135a** is removed, and the body **240** is coupled to the descaler pipe **135** by inserting the free end thereof inside the receptacle cavity **270,** preferably up to make the pipe opening **135a** reaching the (similarly sized) funnel neck **265c.** With such an arrangement, the pipe holding element **275** firmly holds the descaler pipe **135** providing a hermetic coupling between the latter and the body **240.**

Afterwards, the descaler container 205 may be coupled with the body **240.** The descaler container **205** may be safely and easily inserted *(i.e.,* without the need for any particular training) into the housing cavity **245a** by the user through the top aperture **245b.** The descaler container **205** is inserted into the housing portion 245 with the container aperture **230** (and the sealing element **235)** facing downwards (*i.e.,* towards the expansion cavity **260a),** down until the sidewalls **215a** engages (by interference fit) with the container holding element **250.**

With such an arrangement, the container holding element **250** firmly holds the descaler container **205** providing a hermetic coupling between the latter and the body **240** and seals in a watertight manner the boiler **110** from the external environment.

In this way, the descaling apparatus **200** is assembled and ready for performing a descaling procedure in order to combat limestone within the boiler **110.**

The user may activate the descaling procedure simply by selecting a predetermined descaling cycle *(e.g.,* stored in the control arrangement **125)** or by setting a corresponding sequence of operation to be performed through the control panel **155** of the cooking oven **100.** Preferably, the phases of the descaling procedure are performed automatically by the cooking oven **100,** managed by the control arrangement **125** thereof.

The descaling procedure starts with the introduction of a predetermined amount of water inside the vessel **115** of the boiler **110** through the water input **118.** The water is then heated up to a temperature *Te* adapted to generate steam by actuating the heating element (not shown) inside the vessel **115.** Part of the generated steam rises from the vessel **115** up the descaler pipe **135** to the body **240.** Eventually, the part of the generated steam inside the body **240** contacts the sealing element **235** of the descaler container **205** and dissolves it (since the sealing element **235** can be dissolved by hot temperatures and/or water particles as disclosed above).

It should be noted that the expansion cavity **260a** (if provided) allows the steam expanding and, thus, evenly contacting the whole surface of the sealing element **235.** Therefore, the sealing element **235** dissolves substantially in its entirety and the risk of clogging of the descaler pipe **135** due to not dissolved portions of the sealing element **235** is greatly reduced.

Subsequently, the descaling agent **210** pours out of the descaler container **205** and falls by gravity down into the expansion cavity **260a** first (if provided), and then in the funnel cavity **265a** of the body **240.** Advantageously, the expansion cavity **260a** reduces the probability of a packing of the descaling agent **210** within the funnel cavity **265a** and a subsequent slowing of the descaling procedure. The shape of the funnel cavity **265a** efficiently routes the descaling agent **210** into the descaler pipe **135.**

The size of the funnel neck **265c** is equal to, or smaller than, the size of the pipe aperture **135a** allows a passage of the descaling agent **210** from the body **240** to the descaler pipe **135** without experiencing any leakage thereof into the receptacle portion **270.**

The descaling agent **210** falls by gravity down the whole descaler pipe **135** and reaches the vessel **115** where it mixes with the water contained therein. In other words, the descaling agent dilutes in the water contained in the vessel **115.**

After the boiler **110** has generated steam for a first predetermined time period *(e.g.,* as defined by instructions stored in a memory of the control arrangement **125** or directly set by the user), *i.e.* a time period sufficient for dissolving the sealing element **235,** the power supplied to the heating element is adjusted *(e.g.,* reduced) in order to stabilize the diluted descaling agent **210** at a descaling temperature *Td.* At such descaling temperature *Td,* the diluted descaling agent **210** efficiently reacts with scales/limestone within the vessel and with scales/limestone encrustation on the heating element removing (dissolving) them.

The descaling temperature *Td* is maintained for a second predetermined time period (again, *e.g.* defined by instructions stored in a memory of the control arrangement **125** or directly set by the user) that allows the diluted descaling agent **210** performing a substantially complete removal (dissolution) of the scales/limestone from the component parts of the boiler **110.**

Subsequently, the heating element is turned off *(e.g.,* the heating element is disconnected from the power supply) and the diluted descaling agent **210** together with the removed scales/limestone is drained out the boiler **110** through the water output **120.** Preferably, the descaling process ends with a rinsing of the vessel **115** performed by introducing and then draining away fresh water (through the water input **118** and water output **120,** respectively).

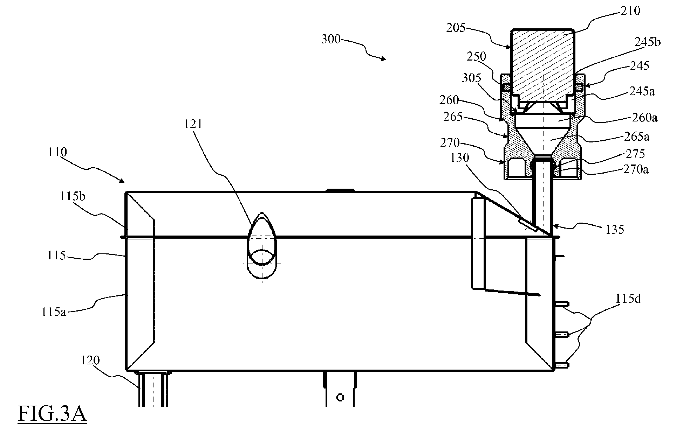

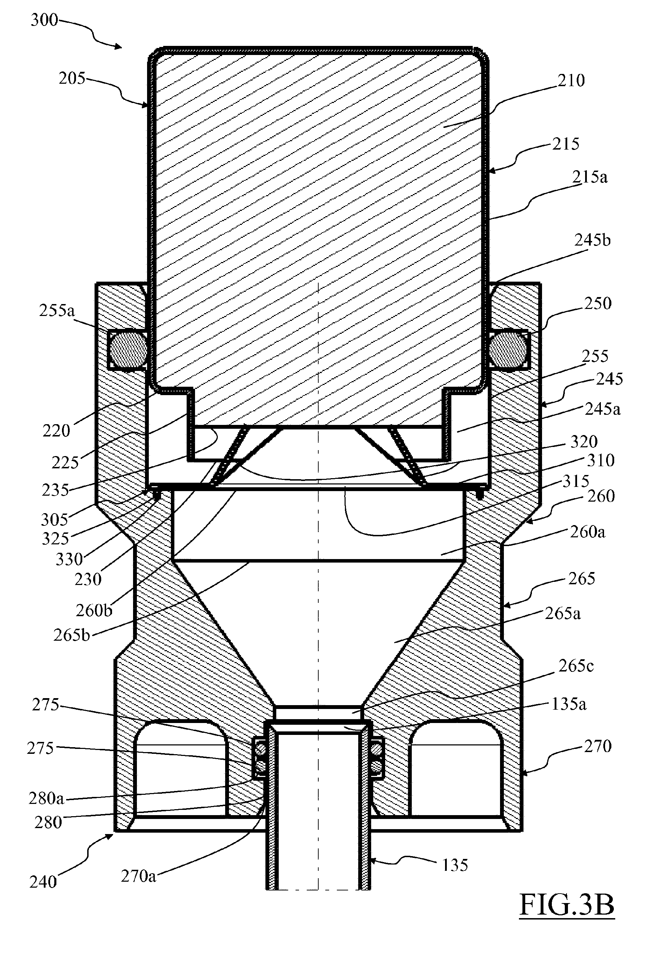

**Figure 3A** is a cross-sectional side view of the boiler **110** comprising a descaling apparatus **300** according to another embodiment of the invention and **Figure 3B** is, still in cross section, an enlarged view of the descaling apparatus **300.**

The descaling apparatus **300** differs from the descaling apparatus **200** described above in what follows.

The descaling apparatus **300** comprises a support element **305** adapted to support the sealing element **235** of the descaler container **205** until the former is substantially completely dissolved by the steam during the descaling process.

The support element **305** comprises a base **310** which, preferably, is adapted to couple with the housing portion **245** at the bottom of the housing cavity **245a.**

A hole **315** is provided in the support element **305** that allows steam reaching the housing cavity **245a** and the descaling agent **210** reaching the expansion cavity **260a.** Preferably, the hole **315** is provided at a center of the base **310.** Even more preferably, the hole **315** has a size *(e.g.,* main side for a quadrilateral hole **315)** equal to, or smaller than, the expansion aperture **260b.**

A plurality of support flanges **320** *(e.g.,* four in the example at issue, only two of which visible in the figures) is also comprised in the support element **305.** Each support flange **320** protrudes from the base **310** towards the top aperture **245b** of the housing portion **245.** The support flanges **320** are designed to contact the sealing element **235,** once the descaler container **205** is inserted inside the housing cavity **245a.** Preferably, the support flanges **320** protrude transversally from the base **310** at a border thereof that defines the hole **315.**

Preferably, although not limitatively, the support element **305** may also comprise a plurality of coupling elements 325 *(e.g.,* four in the example at issue, only two of which visible in the figures), preferably adapted to fit *(e.g.,* snap-fit) matching receptacles **330** provided on the bottom of the housing portion **245** (exposed within the housing cavity **245a).** For example, coupling elements **325** may comprise tabs protruding from a (external) border of the base **310** transversal thereto and opposite with respect to the support flanges **320.** Such tabs fit the receptacles **330,** thus ensuring a correct positioning of the support element **305** within the housing cavity **245a.**

Advantageously, the support element **305** may be manufactured as a single-piece component by cutting, punching and bending a single foil of suitable material, such as for example a metal resistant to water and to the descaling agent **210** *(e.g.,* stainless steel), as should be apparent to those skilled in the art.

During the descaling procedure, the support element **305** maintains the sealing element **235** in position until the latter is substantially completely dissolved by the part of the steam that reaches it.

The support element **305** allows avoiding that a not dissolved portion of the sealing element **235,** sufficiently large to obstruct the descaler pipe **135,** falls down, through the cavities **245a, 260a** and **265a,** into the descaler pipe **135** (thus slowing the descaling procedure).

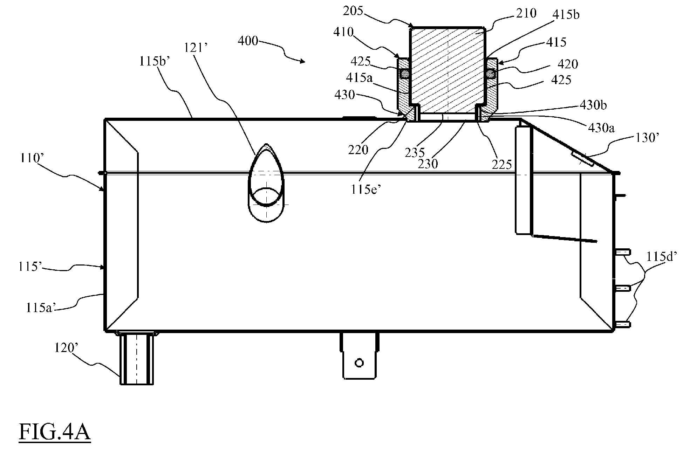

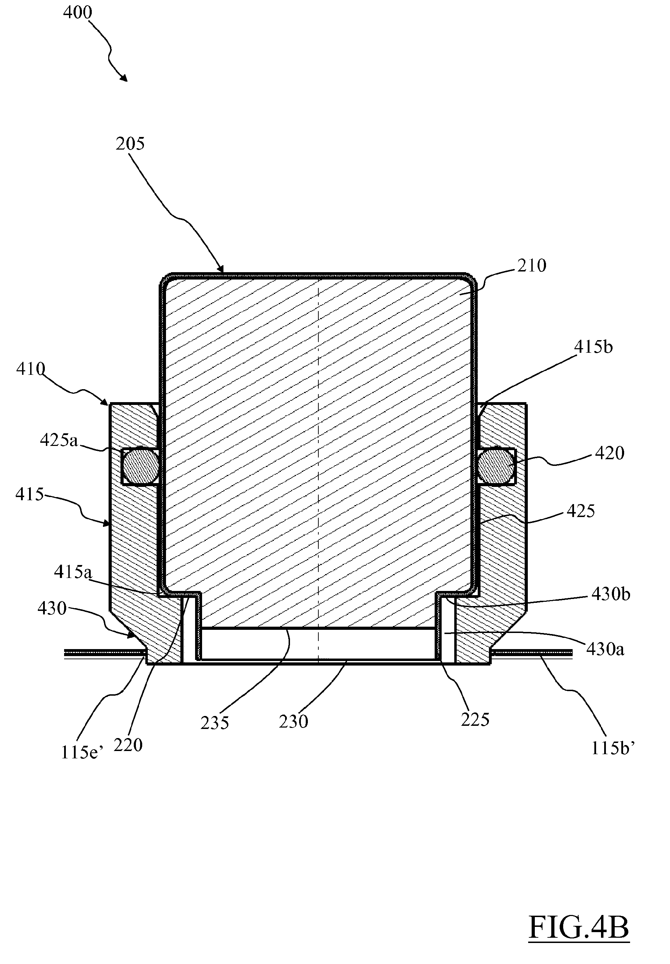

**Figure 4A** is a cross-sectional side views of a boiler **110'** comprising a descaling apparatus **400** according to a different embodiment of the invention and **Figure 4B** is, still in cross section, an enlarged view of the descaling apparatus **400.**

The boiler **110'** differs from the boiler **110** described above (hereinafter, the apex is used for differentiating components of the boiler **110'** from components of the boiler **110)** in that the boiler **110'** lacks the descaler pipe **135** and in that a body aperture **115e'** is provided on the cover portion **115b'** of the vessel **115'.**

The body aperture **115e'** is adapted to be coupled with a body **410** of the descaling apparatus **400.** The body **410** may be coupled either in a permanent manner or in a removable manner with the body aperture **115e'** and with the vessel **115'.** For example, in order to achieve a permanent coupling, the body **410** may be formed integral with the vessel **115'** or may be overmoulded to the vessel **115'.** Instead, in order to achieve a removable coupling, the body **410** may be provided with coupling elements (not shown, e.g., snap-fitting, threaded or bayonet-type holding elements may be provided) adapted to match corresponding coupling elements provided at the body aperture **115e'.**

In order to provide an easy access to the body **410** of the descaling apparatus **400,** a window (denoted in **Figure 1** by a dotted circle and by the reference **140b)** may be provided in the top cover **140** of the cooking oven **100.** Preferably, a gasket element (not shown in the drawing) may be provided between the opening **140b** and the body **410** in order to seal the internal parts of the component section **100_{COMP}** from the external environment.

The body **410** of the descaling apparatus **400 -** as can be best seen in **Figure 4B** **-** preferably comprises a housing portion **415** adapted to, at least partly, house the descaler container **205.** For example, the housing portion **415** has substantially a housing cavity **415a** adapted to house the descaler container **205** *(e.g.,* cylindrical even though prism-shaped alternative housing portions are not excluded, for housing correspondingly prism-shaped containers).

Preferably, the housing portion **415** comprises a top aperture **415b** that, in the example at issue, opens at the top of the body **410** *(i.e.,* on the environment outside the cooking oven **100).** The top aperture **415b** is adapted to be fitted by the container body **215,** allowing the, at least partial, insertion of the descaler container **205** in the housing cavity **415a.** Preferably, the container body **215** fits the top aperture **415a** with the sidewalls **215a.**

Within the housing cavity **415a** a (container) holding element **420** is provided, in order to hold the descaler container **205** in its working position once inserted. For example, the holding element **420** may be implemented by an O-ring (for a cylindrical housing portion **415** and a cylindrical descaler container **205),** by any other suitable mechanical gasket, or any equivalent thereof.

The holding element **420** is, at least partly, arranged in a groove, or niche, **425a** provided in an inner wall **425** of the housing portion **415.** Preferably, the groove **425a** is provided in the inner wall **425** in a position close to the top aperture **415b.**

The holding element **420** is adapted to block the descaler container **205** in its working position, once the latter is inserted in the housing portion **415** of the body **410.** Particularly, the holding element **420** is designed to hold the descaler container **205** (by means of interference fit) in its working position against a kinetic force generated by the pressure within the boiler **110'** during the generation of steam. In other words, the holding element **420** prevents the descaler container **205** form popping out of the housing portion **415** of the body **410** due to steam pressure. Preferably, the holding element **420** may be made of any suitable material ensuring a high static friction coefficient, such as for example a silicone foam or a polymeric elastomer.

It should be noted that alternative holding elements (not shown) might be devised in order to hold the descaler container **205.** For example, snap-fitting, threaded or bayonet-type holding elements may be provided as an alternative in the housing portion **415.** Such snap-fitting, threaded or bayonet-type holding elements being adapted to couple with corresponding additional matching portions (not shown) provided on the descaler container **205.**

Preferably, although not limitatively, at a lower end of the housing portion **415** *(i.e.,* opposite to the top aperture **415b)** a neck portion **430** is provided. The neck portion **430** has a neck cavity **430a** that is in fluid communication with the housing cavity **415a** of the housing portion **415.** For example, at the bottom of the housing portion **415** a neck aperture **430b** seamlessly connects the housing cavity **415a** with the neck cavity **430a.**

Preferably, the neck aperture **430b** has a size *(e.g.,* a diameter in case of a cylindrical descaler container **205)** larger than a size of the container aperture **230** in such a way to allow inserting the descaler container **205** down until the container neck **225** is contained in the neck cavity **430a.** Such an arrangement of the descaler container **205** inside the body **410** facilitates a pouring of the descaling agent **210** (as described in the following).

In the embodiment shown in the drawings, the size *(e.g.,* the diameter) of the neck cavity **430a** is smaller than the size of the housing cavity **415a** (even though a neck cavity **430a** equal to, or larger than, the housing cavity **415a** may be alternatively provided as well). Such a ratio between the sizes of the cavities **415a** and **430a** allows inserting the descaler container **205** in the housing cavity **415a** down to the container shoulder **220** reaches the bottom of the housing cavity **415a** at the most. Thus, the risk that the descaler container **205** falls down into the vessel **115'** is avoided.

In summary, once in its working position, the descaler container **205** is inserted into the body **410** with its aperture **230** (and the sealing element **225)** facing downward *(i.e.,* towards the bottom of the vessel **115'),** directly exposed to the inside of the vessel **115'.**

In addition, a top cap (not shown in the drawings) adapted to seal the top aperture **415b** is provided. Such a top cap is used to hermetically seal the top aperture **415b** when the descaler container **205** is not inserted *(e.g.,* during cooking operations of the cooking oven **100)** in order to avoid steam and pressure leakages from the top aperture **415b.**

With such an arrangement, the holding element **420** firmly holds the descaler container **205** providing a hermetic coupling between the latter and the body **410** and seals in a watertight manner the boiler **110'** from the external environment.

In this way, the descaling apparatus **400** is assembled and ready for performing a descaling procedure in order to combat limestone/scales within the boiler **110'.**

The descaling procedure starts (as previously described) with the introduction of a predetermined amount of water inside the vessel **115'** of the boiler **110'** through the water input **118'.** The water is then heated up to a temperature *Te* adapted to generate steam by actuating the heating element inside the vessel **115.** In the present embodiment of the invention, the steam generated in the vessel **115'** reaches the top portion **115b'** thereof and directly enters into contacts with the sealing element **235,** dissolving it.

Then, the descaling agent **210** pours out of the descaler container **205** and falls by gravity directly down into the vessel **115'** where it mixes with the water contained therein (in other words, the descaling agent dilutes in water).

Subsequently, the descaling process proceeds as described above, *i.e.* after a first predetermined time the power supplied to the heating element is adjusted *(e.g.,* reduced) in order to stabilize the diluted descaling agent **210** at a descaling temperature *Td* that is maintained for a second predetermined time period during which the diluted descaling agent **210** performs a substantially complete removal (dissolution) of the scales/limestone from the component parts of the boiler **110'.** Afterwards, the heating element is turned off, the diluted descaling agent **210** together with the removed scales/limestone is drained through the water output **120'** and, preferably, the descaling process ends with a rinsing of the vessel **115'.**

The descaling apparatus **400** ensures an efficient and safe-for-the-user transfer of the descaling agent **210** from the descaler container **205** directly into the vessel **115'** of the boiler **110'** *(i. e.,* the descaling agent **210** is provided directly where the scales/limestone to be removed is situated).

Thanks to the descaling apparatuses **200, 300, 400** and the procedures described, it is possible for any untrained user to easily remove limestone deposits and/or scales from substantially the whole boiler **110/110'** of the cooking oven **100.** Moreover, thanks to the descaler container **205** it is possible for any untrained user to safely handle the descaling agent **210** without any harm.

## Claims

1. A cooking oven **(100)** comprising:
- a cooking portion **(100_{COOK})** adapted to cook food stored therein;
- a components portion **(100_{COMP})** for housing components that allow and control an operation of the cooking oven **(100);**
- a steam generation system for generating steam and for supplying the generated steam to the cooking portion, the steam generation system comprising a boiler **(110; 110')** with a vessel **(115; 115')** adapted to contain water to be converted into steam, and
- a descaling apparatus **(200; 300; 400)** adapted to remove scales/limestone from the steam generation system,
**characterized in that**
the descaling apparatus **(200; 300; 400)** comprises a support body **(240; 410)** in fluid communication with the vessel **(115; 115'),** the support body **(240; 410)** being adapted to be provided with a descaling agent container **(205)** adapted to store a descaling agent **(210)** and having an opening sealed by a sealing element **(235),** wherein the support body **(240; 410)** is shaped so that once the descaling agent container **(205)** is coupled with the support body **(240; 410),** the sealing element **(235)** sealing the opening of the descaling agent container results exposed to the steam generated in the vessel **(115; 115').**

2. The cooking oven according to claim 1, wherein the support body **(240; 410)** comprises a housing portion **(245; 415)** having a top aperture **(245b; 415b)** and a housing cavity **(245a; 415a)** adapted to at least partly house the descaling agent container **(205),** the top aperture **(245a)** being adapted to be fitted by descaling agent container **(205).**

3. The cooking oven according to claim 2, wherein the housing portion **(245; 415)** comprises a groove **(255a; 425a)** within the housing cavity **(245a; 415a),** the groove **(255a; 425a)** being adapted to house at least partly a holding element **(250; 420),** in its turn the holding element **(250; 420)** being adapted to hold the descaling agent container **(205)** in its working position once inserted.

4. The cooking oven according to claim 2 or 3, wherein the support body **(240)** comprises a funnel portion **(265)** having a funnel cavity **(265a)** in fluid communication with the housing cavity **(245a),** the funnel cavity **(265a)** having a cross-section with a size decreasing from a funnel top aperture **(265b)** at the housing cavity **(245a)** to a funnel neck **(265c).**

5. The cooking oven according to claim 4, wherein the boiler **(110)** comprises a descaler pipe **(135)** projecting transversal to the vessel **(115),** and wherein the support body **(240)** comprises a receptacle portion **(270)** having a receptacle cavity **(270a)** in fluid communication with the funnel cavity **(265a)** of the funnel portion **(265)** through the funnel neck **(265c),** the receptacle cavity **(270a)** having a size adapted to be fitted by a free end portion of the descaler pipe **(135).**

6. The cooking oven according to claim 5, wherein the receptacle portion **(270)** comprises a groove **(280a)** within the receptacle cavity **(270a),** the groove **(280a)** being adapted to house at least partly a further holding element **(275),** in its turn the holding element **(275)** being adapted to hold the descaler pipe **(135)** and the body **(240)** in their working position.

7. The cooking oven according to claim 6 or 5, wherein the funnel neck **(265c)** has a size corresponding to, or smaller than, an inner size of the descaler pipe **(135).**

8. The cooking oven according to any one of the claims 4 to 7, wherein the support body **(240)** comprises an expansion portion **(260)** provided between the housing portion **(245)** and the funnel portion **(265),** the expansion portion **(260)** having an expansion cavity **(260a)** in fluid communication with both the housing cavity **(245a)** and the funnel cavity **(265a),** and an expansion aperture **(260b)** having a size larger than a size of a container aperture **(230)** of the descaling agent container **(205)** but smaller than the size of the housing cavity **(245a).**

9. The cooking oven according to any one of the claims 2 to 8, further comprising a support element **(305)** adapted to support the sealing element **(235)** of the descaler container **(205),** the support element **(305)** comprising a base **(310)** adapted to couple with the housing portion **(245)** at a bottom of the housing cavity **(245a)** a hole **(315)** for allowing steam reaching the housing cavity **(245a)** and the descaling agent **(210)** leaving the housing cavity **(245a),** a plurality of support flanges **(320)** protruding from the base **(310)** towards the top aperture **(245b)** of the housing portion **(245)** adapted to contact and support the sealing element **(235).**

10. The cooking oven according to claim 2 or 3, wherein the support body **(410)** comprises a neck portion **(430)** having a neck cavity **(430a)** in fluid communication with the housing cavity **(415a)** of the housing portion **(415)** through neck aperture **(430b),** the neck aperture **(430b)** having a size larger than a size of a container aperture **(230)** of the descaling agent container **(205)** but smaller than the size of the housing cavity **(415a),** and wherein the neck cavity **(430a)** faces the interior of the vessel **(115').**

11. The cooking oven according to claim 10, wherein the vessel **(115')** comprises a body aperture **(115e')** adapted to be coupled with the support body **(410).**

12. The cooking oven according to any one of the claims 1 to 11, wherein the support body **(240; 410)** is coupled with the boiler **(110; 110')** in a removable manner.

13. The cooking oven according to any one of the claims 1 to 11, wherein the support body **(240; 410)** is coupled with the boiler **(110; 110')** in a non-removable manner.

14. The cooking oven according to any one of the claims 1 to 13, wherein the descaling apparatus **(200; 300; 400)** further comprises a cap adapted to seal the top aperture **(245b; 415b).**

15. The cooking oven according to any one of the claims 3 to 13, when depending directly or indirectly on claim 3 or 6, wherein a holding element **(250; 420)** and/or the further holding element **(275)** comprise at least one O-ring gasket element.
